# EUROPEAN PATENT APPLICATION

(11) **EP 4 734 242 A1**
(43) Date of publication of application: **29.04.2026**
(21) Application number: 25207202.0
(22) Date of filing: 07.10.2025
(51) Int. Cl.: H01M 50/147, H01M 50/15, H01M 50/342

(54) **SECONDARY BATTERY AND BATTERY MODULE INCLUDING THE SAME**

(30) Priority: 07.10.2024 KR 20240135600
(71) Applicant: SAMSUNG SDI CO., LTD., Yongin-si, Gyeonggi-do 17084 (KR)
(72) Inventor: BAEK, Soo Min, 16678 Suwon-si, Gyeonggi-do, (KR); JEONG, Myung Ha, 16678 Suwon-si, Gyeonggi-do, (KR)
(74) Representative: Gulde & Partner

(57) **Abstract**

A secondary battery, including an electrode assembly, a case accommodating the electrode assembly, and a vent in the case, the vent being deformable by a first operating pressure and rupturable by a second operating pressure greater than the first operating pressure.

## Description

### BACKGROUND

### Field

The present disclosure relates to a secondary battery and a battery module including the same.

### Description of the Related Art

In general, recently, with the rapid spread of electronic devices that use batteries, such as mobile phones, laptop computers, and electric vehicles, the demand for secondary batteries with high energy density and high capacity has been rapidly increasing. Accordingly, research and development to improve performance of lithium secondary batteries is being actively conducted.

Lithium secondary batteries are batteries that include a positive electrode and a negative electrode containing active materials capable of intercalation and deintercalation of lithium ions and an electrolyte, and the lithium secondary batteries generate electrical energy through oxidation and reduction reactions when a lithium ion is intercalated/deintercalated into/from the positive and negative electrodes.

The above-described information disclosed in the technology that forms the background of the present disclosure is provided to improve understanding of the background of the present disclosure, and thus may include information that does not constitute the related art.

### SUMMARY

The present invention is defined by the appended set of claims. Preferred embodiments are defined by the dependent claims. Embodiments include a secondary battery, including an electrode assembly, a case accommodating the electrode assembly, and a vent in the case, the vent being deformable by a first operating pressure and rupturable by a second operating pressure greater than the first operating pressure.

The case may include a can in which the electrode assembly is accommodated, and a cap plate coupled to the can, the cap plate covering an opening in the can, wherein the vent is in the cap plate or the can.

The vent may include a first portion extending from the case in a first direction, the first portion being deformable by the first operating pressure, and a second portion extending from the first portion in the first direction, the second portion being deformable with the first portion by the first operating pressure and rupturable by the second operating pressure.

The first operating pressure may be greater than 5 kgf/cm² and less than 20 kgf/cm², and the second operating pressure may be 20 kgf/cm².

The vent may include an uneven portion in a first direction.

The uneven portion may include a first uneven portion, and a second uneven portion alternating with the first uneven portion in the first direction.

The uneven portion may further include a first overlapping portion overlapping the case, and a second overlapping portion at which the first uneven portion and the second uneven portion overlap.

A thickness of the first overlapping portion parallel to a second direction intersecting the first direction may be greater than a thickness of the second overlapping portion parallel to the second direction.

The thickness of the second overlapping portion parallel to the second direction may be greater than or equal to 1/10 and less than or equal to 1/2 of a thickness of the case parallel to the second direction.

The thickness of the second overlapping portion parallel to the second direction may decrease in the first direction.

The second overlapping portion may include a deformable overlapping portion deformable by the first operating pressure, and a rupturable overlapping portion deformable along with the deformable overlapping portion by the first operating pressure and rupturable by the second operating pressure.

A thickness of the rupturable overlapping portion parallel to the second direction may be smaller than a thickness of the deformable overlapping portion parallel to the second direction.

A thickness of the rupturable overlapping portion parallel to the second direction may be greater than or equal to 1/10 and less than or equal to 1/3 of a thickness of the case parallel to the second direction.

The first uneven portion may include a first peak portion protruding from a first surface of the vent in a second direction intersecting the first direction, and a first valley portion recessed in the second direction from a second surface of the vent in a direction opposite to the first surface.

A height of the first peak portion parallel to the second direction may be equal to a depth of the first valley portion parallel to the second direction.

Lengths of the first peak portion and the first valley portion parallel to the first direction are each greater than a thickness of the case parallel to the second direction.

The second uneven portion may include a second peak portion protruding from the second surface in a direction opposite to the second direction, and a second valley portion recessed from the first surface in the direction opposite to the second direction.

A height of the second peak portion parallel to the second direction may be equal to a depth of the second valley portion parallel to the second direction.

Lengths of the second peak portion and the second valley portion parallel to the first direction may each be greater than a thickness of the case parallel to the second direction.

Embodiments include a battery module, including a housing, and one or more secondary batteries disposed in the housing, wherein the secondary battery includes an electrode assembly, a case accommodating the electrode assembly, and a vent in the case, the vent being deformable by a first operating pressure and rupturable by a second operating pressure greater than the first operating pressure.

These and other aspects and features of the present disclosure will be described in or will be apparent from the following description of some embodiments of the present disclosure.

### BRIEF DESCRIPTION OF THE DRAWINGS

Features will become apparent to those of ordinary skill in the art by describing in detail exemplary embodiments with reference to the attached drawings, in which:
FIG. 1 is a perspective view schematically illustrating a configuration of a battery module according to one or more embodiments of the present disclosure;
FIG. 2 is a perspective view schematically illustrating a configuration of a secondary battery according to one or more embodiments of the present disclosure;
FIG. 3 is an exploded perspective view of FIG. 2;
FIG. 4 is an exploded perspective view schematically illustrating a configuration of an electrode assembly according to one or more embodiments of the present disclosure;
FIG. 5 is a cross-sectional view along line A-A' or B-B' in FIG. 3.
FIG. 6 is a cross-sectional view schematically illustrating a state in which a vent according to one or more embodiments of the present disclosure is deformed;
FIG. 7 is a cross-sectional view schematically illustrating a state in which the vent of FIG. 6 is ruptured;
FIG. 8 is a perspective view schematically illustrating a configuration of a secondary battery according to one or more embodiments of the present disclosure;
FIG. 9 is an exploded perspective view of FIG. 8;
FIG. 10 is a cross-sectional view along line C-C' or D-D' in FIG. 9;
FIG. 11 is a cross-sectional view schematically illustrating a state in which a vent according to one or more embodiments of the present disclosure is deformed; and
FIG. 12 is a cross-sectional view schematically illustrating a state in which the vent of FIG. 11 is ruptured.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein within the scope of the disclosure defined by the appended set of claims.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

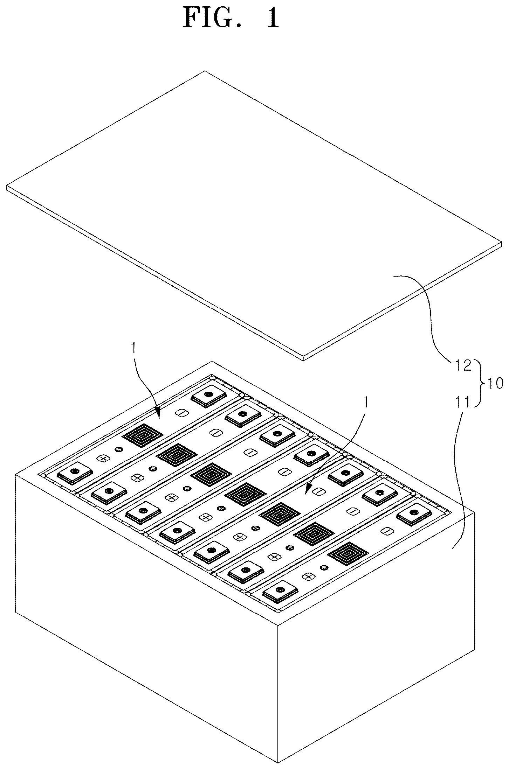

FIG. 1 is a perspective view schematically illustrating a configuration of a battery module according to a first embodiment of the present disclosure.

Referring to FIG. 1, the battery module according to the present embodiment includes a housing 10 and a secondary battery 1.

The housing 10 may serve as a part which supports the secondary battery 1 and protects the secondary battery 1 from an external impact and foreign substances. The housing 10 may provide a space for accommodating the secondary battery 1.

The housing 10 may include a housing body 11 and a housing cover 12.

The housing body 11 may be formed in a hollow box shape with one open side. For example, the open side of the housing body 11 may be disposed upward in the configuration shown FIG. 1.

A cross-sectional shape of the housing body 11 may be other than the quadrangular shape illustrated in FIG. 1, and a design of the cross-sectional shape may be changed to any of various shapes such as a polygonal shape, a circular shape, and an elliptical shape.

The housing cover 12 may be coupled to the housing body 11 and close the inner space of the housing body 11. For example, the housing cover 12 may be formed in a substantially plate shape. The housing cover 12 may be disposed to face an upper surface of the housing body 11 (in the orientation shown in FIG. 1).

The housing cover 12 may be fixed to an upper end portion of the housing body 11 by various coupling methods such as bolting, welding, and fitting.

The secondary battery 1 may function as a unit structure for storing and supplying power in the battery module. The secondary battery 1 may be disposed in the housing 10.

The secondary battery 1 may be provided as a plurality of the secondary battery 1. The plurality of secondary batteries 1 may be disposed in a plurality of rows in the housing 10. The plurality of secondary batteries 1 may be connected in series or parallel through an electrical part such as a busbar.

Hereinafter, a prismatic lithium-ion secondary battery will be described as an example of the secondary battery 1. However, the secondary battery 1 may be a lithium polymer battery or a cylindrical battery.

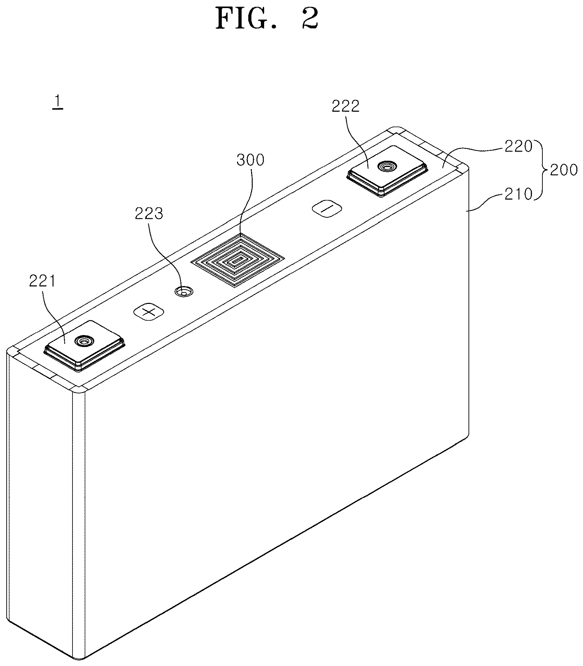

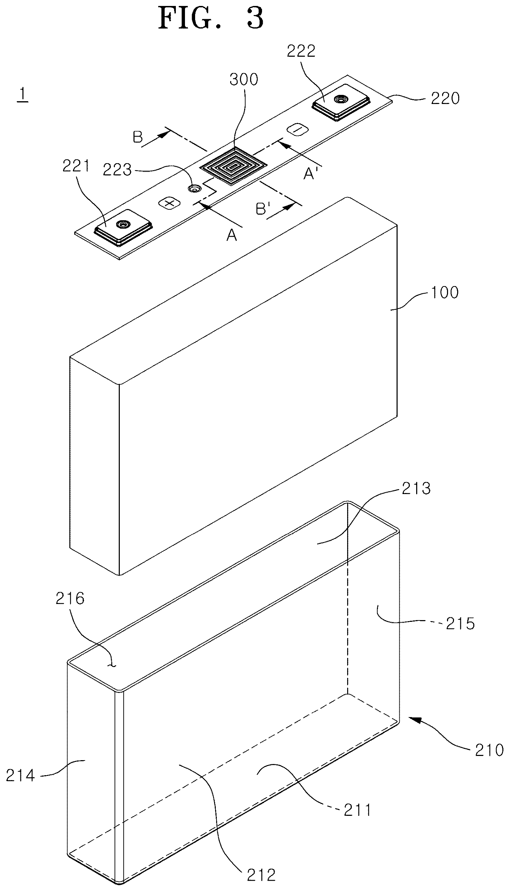

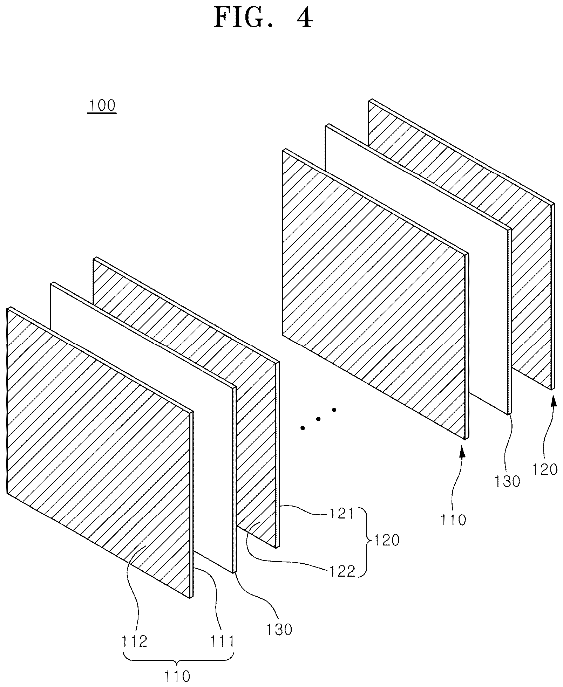

FIG. 2 is a perspective view schematically illustrating a configuration of the secondary battery according to the first embodiment of the present disclosure, FIG. 3 is an exploded perspective view of FIG. 2, and FIG. 4 is an exploded perspective view schematically illustrating a configuration of an electrode assembly according to the first embodiment of the present disclosure.

Referring to FIGS. 2 to 4, the secondary battery 1 according to the first embodiment of the present disclosure includes an electrode assembly 100, a case 200, and a vent 300.

The electrode assembly 100 may function as a unit structure for performing operations of charging and discharging power in the secondary battery 1. The electrode assembly 100 may be accommodated in the case 200.

The electrode assembly 100 may include a first electrode 110, a second electrode 120, and a separator 130 disposed between the first electrode 110 and the second electrode 120. The first electrode 110, the separator 130, and the second electrode 120 may be provided as a plurality of first electrodes 110, a plurality of separators 130, and a plurality of second electrodes 120.

Hereinafter, an example of an electrode assembly 100 having a stacked form, in which the plurality of first electrodes 110, the plurality of separators 130, and the plurality of second electrodes 120 are sequentially stacked, will be described. However, the electrode assembly 100 may have a form in which the first electrode 110, the separator 130, and the second electrode 120 are wound about a winding axis in a clockwise or counterclockwise direction in a state of being stacked.

The first electrode 110 may function as either the negative electrode or positive electrode of the electrode assembly 100. Hereinafter, an example in which the first electrode 110 is the negative electrode of the electrode assembly 100 will be described. However, the first electrode 110 may function as the positive electrode of the electrode assembly 100.

The first electrode 110 may be provided as a plurality of first electrodes 110. The plurality of first electrodes 110 may be disposed between a front portion 212 and a rear portion 213 of a can 210 which will be described below. A design of the number of first electrodes 110 may be variously changed depending on the charging capacity of the secondary battery 1.

The first electrode 110 according to the present embodiment may include a negative electrode plate 111 and a negative electrode active material layer 112.

The negative electrode plate 111 may be formed in the shape of a foil including a metal material such as copper, a copper alloy, nickel, or a nickel alloy.

The type, size, and shape of the negative electrode plate 111 may vary, as long as the negative electrode plate 111 does not cause a chemical change in the secondary battery 1 and has conductivity.

A design of a cross-sectional shape of the negative electrode plate 111 may be changed to have any one of various shapes in addition to the rectangular shape illustrated in FIG. 4.

The negative electrode active material layer 112 may be applied on the negative electrode plate 111. The negative electrode active material layer 112 may be applied on both surfaces of the negative electrode plate 111. In other embodiments, the negative electrode active material layer 112 may be applied on only one surface of the negative electrode plate 111.

In the present embodiment, since the first electrode 110 functions as a negative electrode, the negative electrode active material layer 112 may include a negative electrode active material.

The negative electrode active material may include a material into which lithium ions may be reversibly intercalated and/or from which lithium ions may be reversibly deintercalated, for example, a lithium metal, a lithium metal alloy, a material which may be doped in and undoped from lithium, or a transition metal oxide.

The material, into which lithium ions may be reversibly intercalated and/or from which lithium ions may be reversibly deintercalated, may include a carbon-based negative electrode active material such as crystalline carbon, amorphous carbon, or a combination thereof.

Examples of the crystalline carbon may include graphite such as natural graphite or artificial graphite in amorphous, platy, flake, spherical, or fibrous form, and an example of the amorphous carbon may be soft or hard carbon, mesophase pitch carbide, fired coke, or the like.

An alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used as the lithium metal alloy.

A Si-based negative electrode active material or a Sn-based negative electrode active material may be used as the material which may be doped in and undoped from lithium. The Si-based negative electrode active material may be silicon, a silicon-carbon composite, SiOₓ (0<x<2), a Si-Q alloy (Q is selected from the group consisting of alkaline metals, alkaline earth metals, Group 13 elements, Group 14 elements (excluding Si), Group 15 elements, Group 16 elements, transition metals, rare earth elements, and combinations thereof), or a combination thereof. The Sn-based negative electrode active material may be Sn, SnO₂, a Sn-based alloy, or a combination thereof.

The silicon-carbon composite may be a composite of silicon and amorphous carbon. The silicon-carbon composite may have a form including silicon particles whose surface is coated with amorphous carbon. For example, the silicon-carbon composite may include a secondary particle (core) in which silicon primary particles are assembled and an amorphous carbon coating layer (shell) located on the surface of the secondary particle.

The amorphous carbon may also be located between the silicon primary particles so that, for example, the silicon primary particles may be coated with the amorphous carbon. The secondary particles may be dispersed and present in an amorphous carbon matrix.

The silicon-carbon composite may also further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used in combination with the carbon-based negative electrode active material.

The negative electrode active material layer 112 may further include a negative electrode conductive material and a negative electrode binder.

The negative electrode conductive material is used to impart conductivity to the negative electrode active material layer 112, and any material that does not cause a chemical change and is electrically conductive may be used.

Examples of the negative electrode conductive material may be a carbon-based material such as natural graphite, artificial graphite, carbon black, acetylene black, Ketjen black, carbon fibers, carbon nanofibers, and carbon nanotubes, a metal-based material in the form of a metal powder or metal fibers containing copper, nickel, aluminum, silver, and the like, a conductive polymer such as a polyphenylene derivative, or a mixture thereof.

The negative electrode binder serves to attach particles constituting the negative electrode active material to each other well and attach the negative electrode active material to the negative electrode plate 111 well.

A non-aqueous binder, an aqueous binder, a dry binder, or a combination thereof may be used as an example of the negative electrode binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be one of styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, the first active material layer may further include a cellulose compound which provides viscosity. One or more of carboxymethyl cellulose, hydroxypropyl methyl cellulose, methyl cellulose, and alkaline metal salts thereof may be mixed and used as the cellulose compound. Na, K, or Li may be used as an alkaline metal.

The dry binder is a polymer material capable of being fiberized, and may be, for example, polytetrafluoroethylene, polyvinylidene fluoride, a polyvinylidene fluoride-hexafluoropropylene copolymer, polyethylene oxide, or a combination thereof.

The second electrode 120 may function as the other of the positive electrode or the negative electrode of the electrode assembly 100. Hereinafter, an example in which the second electrode 120 is the positive electrode of the electrode assembly 100 will be described. However, the second electrode 120 may also function as the negative electrode of the electrode assembly 100.

The second electrode 120 may be provided as a plurality of second electrodes 120. The plurality of second electrodes 120 may be disposed between the front portion 212 and the rear portion 213 of the can 210. A design of the number of second electrodes 120 may be variously changed depending on the charging capacity of the secondary battery 1.

The first electrode 110 and the second electrode 120 may be alternately disposed. The second electrode 120 may be spaced a set distance from the first electrode 110.

The second electrode 120 according to the present embodiment may include a positive electrode plate 121 and a positive electrode active material layer 122.

The positive electrode plate 121 may be formed in the shape of a foil including a metal material such as aluminum or an aluminum alloy.

The type, size, and shape of the positive electrode plate 121 may vary, as long as the positive electrode plate 121 does not cause a chemical change in the secondary battery 1 and has conductivity.

A design of a cross-sectional shape of the positive electrode plate 121 may be changed to have any one of various shapes in addition to the rectangular shape illustrated in FIG. 4.

The positive electrode active material layer 122 may be applied on the positive electrode plate 121. The positive electrode active material layer 122 may be applied on both surfaces of the positive electrode plate 121. In other embodiments, the positive electrode active material layer 122 may be applied on only one surface of the positive electrode plate 121.

In the present embodiment, since the second electrode 120 functions as a positive electrode, the positive electrode active material layer 122 may include a positive electrode active material.

The positive electrode active material may be a reversible intercalation and deintercalation compound (lithiated intercalation compound) for lithium. More specifically, one or more compound oxides of a metal selected from cobalt, manganese, nickel, iron, and a combination thereof and lithium may be used as the positive electrode active material.

For example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1.

The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, LNCM), or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, LNCM).

The positive electrode active material layer 122 may further include a positive electrode conductive material.

The positive electrode conductive material is used to impart conductivity to the positive electrode active material layer 122, and any material that does not cause a chemical change and is electronically conductive may be used.

Examples of the positive electrode conductive material may be a carbon-based material such as natural graphite, artificial graphite, carbon black, acetylene black, Ketjen black, carbon fibers, carbon nanofibers, and carbon nanotubes, a metal-based material in the form of a metal powder or metal fibers containing copper, nickel, aluminum, silver, and the like, a conductive polymer such as a polyphenylene derivative, or a mixture thereof.

The positive electrode active material layer 122 may further include a positive electrode binder.

The positive electrode binder serves to attach particles constituting the positive electrode active material to each other well and attach the positive electrode active material to the positive electrode plate well.

A non-aqueous binder, an aqueous binder, a dry binder, or a combination thereof may be used as an example of the positive electrode binder.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be one selected from the group consisting of styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the positive electrode binder, the first active material layer may further include a cellulose compound which imparts viscosity. One or more of carboxymethyl cellulose, hydroxypropyl methyl cellulose, methyl cellulose, and alkaline metal salts thereof may be mixed and used as the cellulose compound. Na, K, or Li may be used as an alkaline metal.

The dry binder is a fibrous polymer material, and may be, for example, polytetrafluoroethylene, polyvinylidene fluoride, a polyvinylidene fluoride-hexafluoropropylene copolymer, polyethylene oxide, or a combination thereof.

The separator 130 may be disposed between the first electrode 110 and the second electrode 120. The separator 130 may perform a function of allowing lithium-ions to move between the first electrode 110 and the second electrode 120 and preventing a short circuit between the first electrode 110 and the second electrode 120.

The separator 130 may be disposed to completely cover a surface region of the electrode assembly 100. Accordingly, the separator 130 may prevent the first electrode 110 and the second electrode 120 from being directly exposed to the outside of the electrode assembly 100.

Polyethylene, polypropylene, polyvinylidene fluoride, or a multilayer film with two or more layers thereof may be used as the separation membrane (i.e., separator 130), and a mixed multilayer membrane such as a two-layer separator with polyethylene/polypropylene, a three-layer separator with polyethylene/polypropylene/polyethylene, and a three-layer separator with polypropylene/polyethylene/polypropylene may be used as the separation membrane.

The separator 130 may include a porous substrate and a coating layer which is located on one surface or both surfaces of the porous substrate and includes an organic material, an inorganic material, or a combination thereof.

The porous substrate may be one polymer selected from polyolefins such as polyethylene and polypropylene, polyesters such as polyethylene terephthalate and polybutylene terephthalate, polyacetal, polyamide, polyimide, polycarbonate, polyetherketone, polyaryl etherketone, polyetherimide, polyamideimide, polybenzimidazole, polyethersulfone, polyphenylene oxide, cyclic olefin copolymers, polyphenylene sulfide, polyethylene naphthalate, glass fiber, Teflon (e.g., Polytetrafluoroethylene (PTFE)), and polytetrafluoroethylene, or a polymer film formed of copolymers or mixtures of two or more thereof.

The organic material may include a polyvinylidene fluoride-based polymer or (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH₂), boehmite and a combination thereof, but the particular inorganic material may vary.

The organic material and the inorganic material may be present as a mixture in one coating layer or in a form in which a coating layer including an organic material and a coating layer including an inorganic material are stacked.

The case 200 may form an overall exterior of the secondary battery 1 and accommodate the electrode assembly 100. The case 200 may include the can 210 and a cap plate 220.

The can 210 may form an overall exterior of the case 200, and the electrode assembly 100 may be disposed in the can 210.

The can 210 may include a bottom portion 211, the front portion 212, the rear portion 213, a first side portion 214, and a second side portion 215.

The bottom portion 211 may form a lower exterior of the can 210 (see FIG. 3). The bottom portion 211 may have a rectangular plate shape.

The front portion 212, the rear portion 213, the first side portion 214, and the second side portion 215 may form an outer periphery of the can 210.

The front portion 212, the rear portion 213, the first side portion 214, and the second side portion 215 may have plate shapes extending upward from an edge of the bottom portion 211 (see FIG. 3).

The front portion 212, the rear portion 213, the first side portion 214, and the second side portion 215 may be disposed to surround the space above the bottom portion 211. The front portion 212, the rear portion 213, the first side portion 214, and the second side portion 215 may be disposed to form a rectangular cross-sectional shape.

The front portion 212 and the rear portion 213 may be disposed to face each other. The front portion 212 and the rear portion 213 may be disposed in parallel. The front portion 212 and the rear portion 213 may have the same area.

The first side portion 214 and the second side portion 215 may be disposed to face each other. The first side portion 214 and the second side portion 215 may be disposed in parallel.

The first side portion 214 and the second side portion 215 may have the same area. The areas of the first side portion 214 and the second side portion 215 may be smaller than the areas of the front portion 212 and the rear portion 213.

The can 210 may include an opening 216. The opening 216 may be a space surrounded by upper end portions of the front portion 212, the rear portion 213, the first side portion 214, and the second side portion 215. The opening 216 may connect the space inside and outside the can 210.

Accordingly, the can 210 according to the present embodiment may have a rectangular parallelepiped shape with an open upper side (in the orientation shown).

The cap plate 220 may be coupled to the can 210 and seal the can 210. The cap plate 220 may be formed to have a flat plate shape.

The cap plate 220 may be disposed in the opening 216 of the can 210 and may cover the opening 216. The cap plate 220 may be disposed parallel to the bottom portion 211 of the can 210.

The cap plate 220 may be seated on an upper end portion of the can 210, more specifically, on the upper end portions of the front portion 212, the rear portion 213, the first side portion 214, and the second side portion 215.

The cap plate 220 may be joined to the can 210 by welding. A welded portion may be formed between the can 210 and the cap plate 220.

The cap plate 220 may include a first terminal 221 and a second terminal 222. The cap plate 220 may entirely support the first terminal 221 and the second terminal 222.

The first terminal 221 may protrude outward from the cap plate 220. The first terminal 221 may be electrically connected to the second electrode 120.

Since the second electrode 120 according to the present embodiment functions as a positive electrode, the first terminal 221 may be exemplified as a positive terminal of the secondary battery 1.

The first terminal 221 according to the present embodiment may be inserted into the cap plate 220. An upper end portion of the first terminal 221 may protrude from the cap plate 220.

In FIG. 3, an example of the first terminal 221 having a quadrangular cross-sectional shape is illustrated, but a design of the cross-sectional shape may be variously changed to a circular shape, an elliptical shape, a polygonal shape, or the like.

The first terminal 221 may be formed of an electrically conductive material such as aluminum, nickel, or copper.

The second terminal 222 may protrude outward from the cap plate 220 at a location spaced apart from the first terminal 221. The second terminal 222 may be electrically connected to the first electrode 110.

Since the first electrode 110 according to the present embodiment functions as a negative electrode, the second terminal 222 may be exemplified as a negative terminal of the secondary battery 1.

The second terminal 222 according to the present embodiment may be inserted into the cap plate 220. An upper end portion of the second terminal 222 may protrude from the cap plate 220.

In FIG. 3, an example of the second terminal 222 having a quadrangular cross-sectional shape is illustrated, but the cross-sectional shape of the second terminal 222 is not limited thereto, and a design of the cross-sectional shape may be variously changed to a circular shape, an elliptical shape, a polygonal shape, or the like.

The second terminal 222 may be formed of an electrically conductive material such as aluminum, nickel, or copper. The second terminal 222 may be located a set distance from the first terminal 221.

The cap plate 220 according to the present embodiment may further include an electrolyte injection port 223.

The electrolyte injection port 223 may be formed to pass through the cap plate 220, and a sealing plug may be installed in the electrolyte injection port 223. The electrolyte injection port 223 may be disposed between the first terminal 221 and the second terminal 222.

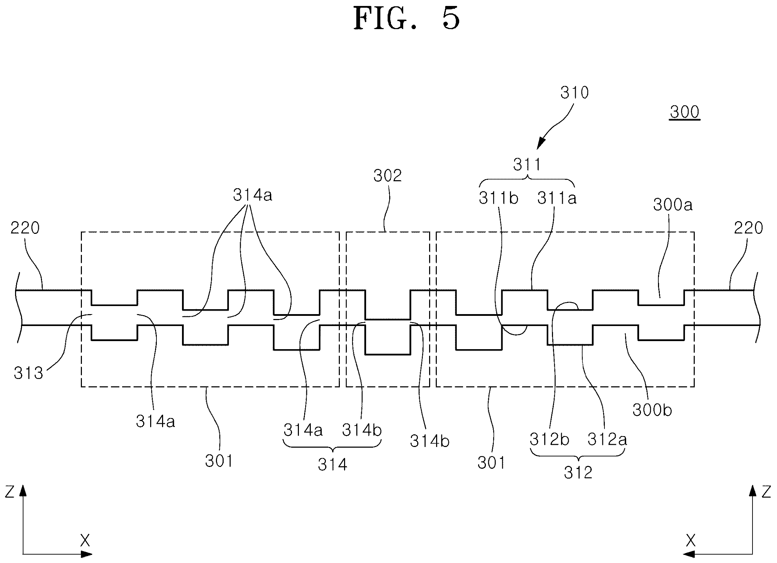

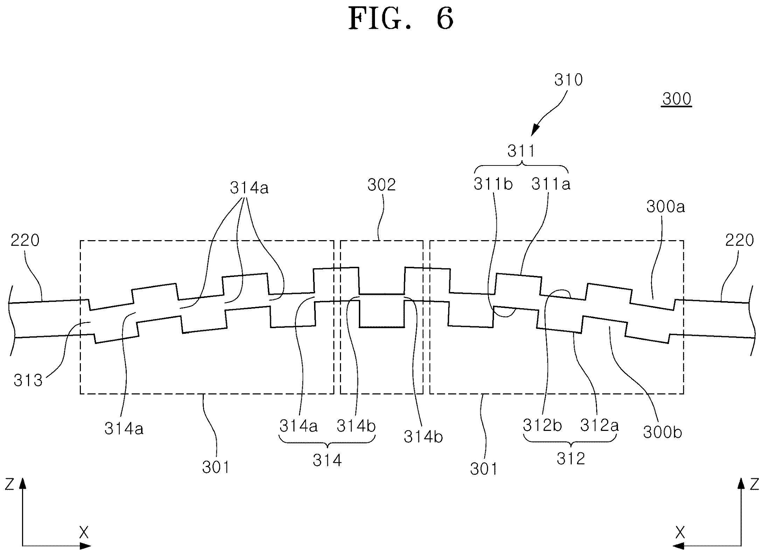

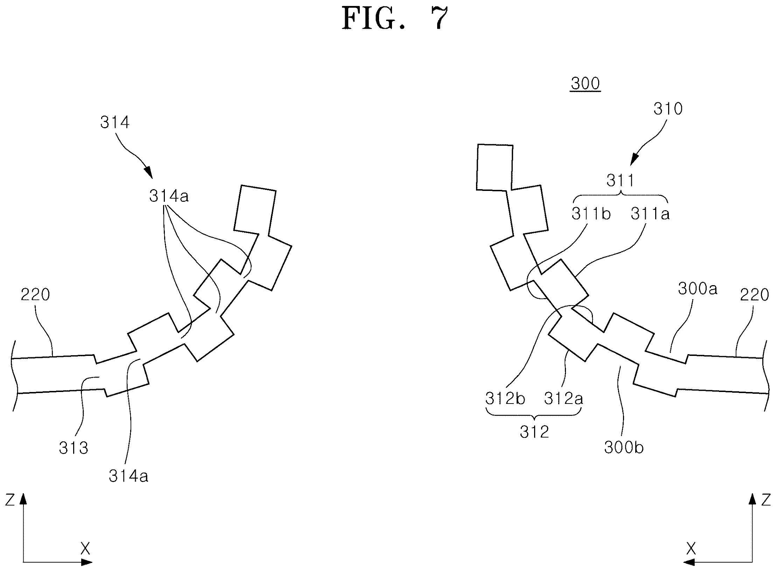

FIG. 5 is a cross-sectional view along line A-A' or B-B' in FIG. 3 (e.g., the views along lines A-A' and B-B' may be the same), FIG. 6 is a cross-sectional view schematically illustrating a state in which the vent according to the first embodiment of the present disclosure is deformed, and FIG. 7 is a cross-sectional view schematically illustrating a state in which the vent according to the first embodiment of the present disclosure is ruptured.

Referring to FIGS. 2 to 7, the vent 300 according to the first embodiment of the present disclosure may be provided in the case 200. More specifically, the vent 300 may be integrally provided with the cap plate 220.

The vent 300 may be integrally formed (e.g., formed in a same process and of a same material into a monolithic and seamless structure) with the cap plate 220 through a half blanking or half piercing process. The vent 300 may be disposed between the first terminal 221 and the second terminal 222.

The vent 300 may function as a configuration which provides a passage through which flames, gas, smoke, or the like generated in the case 200 is discharged to the outside of the case 200 through the cap plate 220 when thermal runaway occurs in the secondary battery 1 due to overcurrent or the like.

The vent 300 may be deformed and/or ruptured in response to a change in internal pressure of the can 210. That is, the vent 300 may prevent an electrolyte or the like in the can 210 from leaking out of the can 210 through the cap plate 220 or block moisture, foreign substances, or the like from entering the can 210 when the secondary battery 1 operates normally.

When thermal runaway occurs in the secondary battery 1, the vent 300 may rupture to induce flames, gas, smoke, or the like generated in the can 210 to be discharged out of the can 210 through the cap plate 220.

A first direction described below may be a direction parallel to an X-axis in FIG. 5 and a direction from an edge of the vent 300 toward a central portion of the vent 300. A second direction may be a direction parallel to a Z-axis in FIG. 5 and a direction from the bottom portion 211 of the can 210 toward the opening 216.

The vent 300 according to the present embodiment is deformed by a first operating pressure and ruptured by a second operating pressure which is higher than the first operating pressure. The vent 300 may include a first portion 301 and a second portion 302.

The first operating pressure is a minimum pressure for deforming the vent 300. The first operating pressure may be a minimum pressure to which an internal pressure of the can 210 increases due to thermal runaway or a fire in the secondary battery 1 and at which emissions such as flames, gas, or smoke generated in the can 210 press the vent 300 and deform the vent 300.

The second operating pressure is a minimum pressure for rupturing the vent 300. The second operating pressure may be a minimum pressure to which an internal pressure of the can 210 increases due to thermal runaway or a fire in the secondary battery 1 and at which emissions such as flames, gas, or smoke generated in the can 210 rupture the vent 300 by further pressing the deformed vent 300.

The first portion 301 may extend from the cap plate 220 of the case 200 in the first direction. The first portion 301 may be deformed into a rounded shape in the second direction by the first operating pressure. The first portion 301 may be deformed into a dome shape.

The first operating pressure may be greater than 5 kgf/cm² and less than 20 kgf/cm². When the first operating pressure is less than or equal to 5 kgf/cm², the first portion 301 is not deformed due to a thickness limit of the vent 300.

The second portion 302 may extend from the first portion 301 in the first direction. The second portion 302 may be deformed into a rounded shape along with the first portion 301 in the second direction by the first operating pressure. The second portion 302 may be deformed into a dome shape.

The second portion 302 may be ruptured by the second operating pressure. The second operating pressure may be 20 kgf/cm². When the second operating pressure is greater than 20 kgf/cm², the welded portion formed between the can 210 and the cap plate 220 may rupture.

The vent 300 according to the present embodiment may include an uneven portion 310. The uneven portion 310 may be formed (e.g., may extend lengthwise) in the first direction.

The uneven portion 310 may include a first uneven portion 311, a second uneven portion 312, a first overlapping portion 313, and a second overlapping portion 314.

The first uneven portion 311 may be provided as a plurality of first uneven portions 311, and the plurality of first uneven portions 311 may be disposed to be spaced apart from each other in the first direction. The first uneven portion 311 may include a first peak portion 311a and a first valley portion 311b.

The first peak portion 311a may protrude from a first surface 300a of the vent 300 in the second direction. The first valley portion 311b may correspond to (e.g., overlap in the second direction) the first peak portion 311a and may be recessed from a second surface 300b of the vent 300 in the second direction.

A height of the first peak portion 311a parallel to the second direction may be the same as a depth of the first valley portion 311b parallel to the second direction.

Lengths of the first peak portion 311a and the first valley portion 311b parallel to the first direction (e.g., parallel to the X-axis) may each be greater than a thickness of the cap plate 220 parallel to the second direction (e.g., parallel to the Z-axis). When the lengths of the first peak portion 311a and the first valley portion 311b parallel to the first direction are each smaller than the thickness of the cap plate 220 parallel to the second direction, cracks may be generated in the cap plate 220 during a half blanking or half piercing process for the first uneven portion 311.

The second uneven portion 312 and the first uneven portion 311 may be alternately disposed in the first direction. The first uneven portion 311 and the second uneven portion 312 may be disposed in a concentric rectangular structure in which central axes are coaxial.

The second uneven portion 312 may be provided as a plurality of second uneven portions 312, and the plurality of second uneven portions 312 may be disposed to be spaced apart from each other in the first direction. The second uneven portion 312 may include a second peak portion 312a and a second valley portion 312b.

The second peak portion 312a may protrude from the second surface 300b of the vent 300 in a direction opposite to the second direction (e.g., negative Z-axis direction). The second valley portion 312b may correspond to the second peak portion 312a and may be recessed from the first surface 300a of the vent 300 in the direction opposite to the second direction.

A height of the second peak portion 312a parallel to the second direction may be the same as a depth of the second valley portion 312b parallel to the second direction.

Lengths of the second peak portion 312a and the second valley portion 312b in the first direction may each be greater than the thickness of the cap plate 220 in the second direction. When the lengths of the second peak portion 312a and the second valley portion 312b parallel to the first direction are each smaller than the thickness of the cap plate 220 parallel to the second direction, cracks may be generated in the cap plate 220 during a half blanking or half piercing process for the second uneven portion 312.

The first overlapping portion 313 may overlap the cap plate 220. For example, referring to FIGS. 1 and 3, the vent 300 and the cap plate 220 may overlap each other in the first direction (e.g., in the X-axis direction), and the first overlapping portion 313 may be an edge of the vent 300 overlapping and contacting the cap plate 220 in the first direction. The first overlapping portion 313 may be a portion at which the cap plate 220 comes into contact with the first uneven portion 311 or the second uneven portion 312. The first overlapping portion 313 may be provided in the first portion 301.

At the second overlapping portion 314, the first uneven portion 311 and the second uneven portion 312 may overlap each other in the first direction (e.g., may come into contact with each other). The second overlapping portion 314 may be a portion at which the first uneven portion 311 and the second uneven portion 312 come into contact with each other. The second overlapping portion 314 may be provided in the first portion 301.

The first overlapping portion 313 and the second overlapping portion 314 may uniformly distribute the first operating pressure while inducing the deformation of the uneven portion 310 by the first operating pressure, and assist in rupturing the uneven portion 310 by the second operating pressure.

A thickness of the first overlapping portion 313 parallel to the second direction may be greater than a thickness of the second overlapping portion 314 parallel to the second direction.

The thickness of the second overlapping portion 314 parallel to the second direction may be greater than or equal to 1/10 and less than or equal to 1/2 of the thickness of the cap plate 220 parallel to the second direction. When the thickness of the second overlapping portion 314 parallel to the second direction is smaller than 1/10 of the thickness of the cap plate 220 parallel to the second direction, it is difficult to implement a half blanking or half piercing process for forming the uneven portion 310, and when the thickness of the second overlapping portion 314 parallel to the second direction is greater than 1/2 of the thickness of the cap plate 220 parallel to the second direction, the uneven portion 310 is not deformed.

The thickness of the second overlapping portion 314 parallel to the second direction may decrease in the first direction. Accordingly, the uneven portion 310 may be deformed into a rounded dome shape.

The second overlapping portion 314 may include a deformable overlapping portion 314a and a rupturable overlapping portion 314b.

The deformable overlapping portion 314a may be deformed by the first operating pressure. The deformation of the uneven portion 310 may be induced by the first operating pressure. The deformable overlapping portion 314a may be provided in the first portion 301.

The rupturable overlapping portion 314b may be deformed along with the deformable overlapping portion 314a by the first operating pressure and ruptured by the second operating pressure. The rupturable overlapping portion 314b may be closer to a central portion of the uneven portion 310 than the deformable overlapping portion 314a. In other words, the rupturable overlapping portion 314b may be provided in the second portion 302.

A thickness of the rupturable overlapping portion 314b parallel to the second direction may be smaller than a thickness of the deformable overlapping portion 314a parallel to the second direction and may be greater than or equal to 1/10 and less than or equal to 1/3 of the thickness of the cap plate 220 parallel to the second direction.

When the thickness of the rupturable overlapping portion 314b parallel to the second direction is smaller than 1/10 of the thickness of the cap plate 220 parallel to the second direction, it may be difficult to implement the half blanking or half piercing process for forming the uneven portion 310, and when the thickness of the rupturable overlapping portion 314b parallel to the second direction is greater than the thickness of the deformable overlapping portion 314a or greater than 1/3 of the thickness of the cap plate 220, the rupturable overlapping portion 314b may not be ruptured by the second operating pressure.

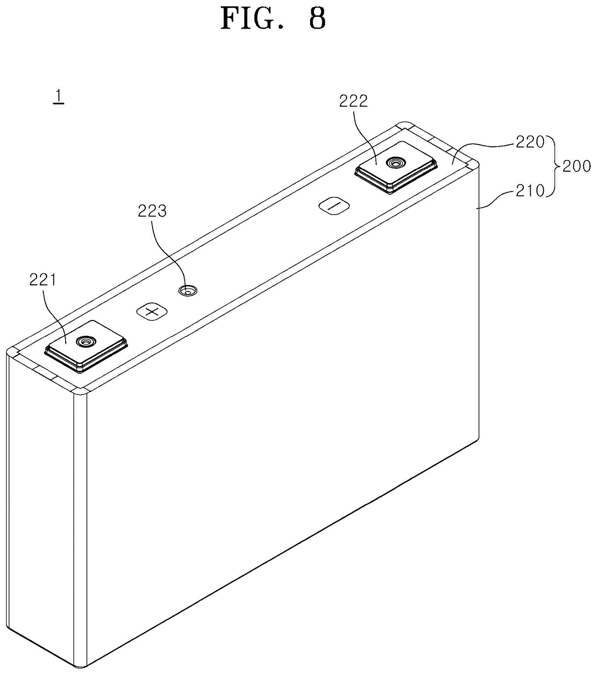

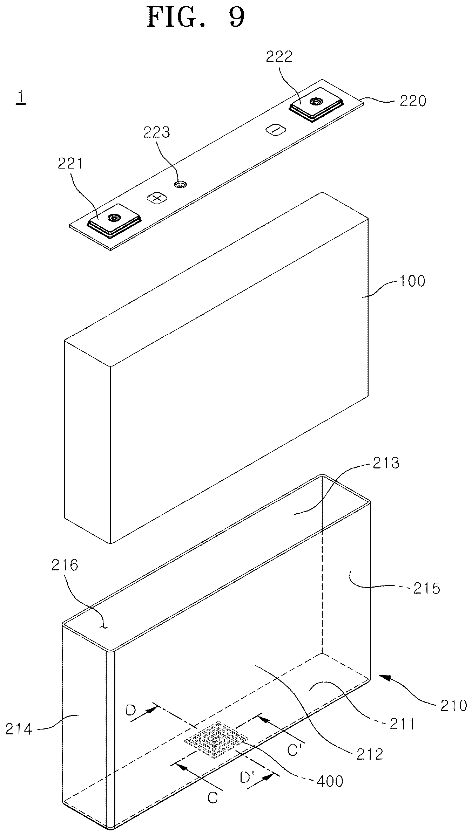

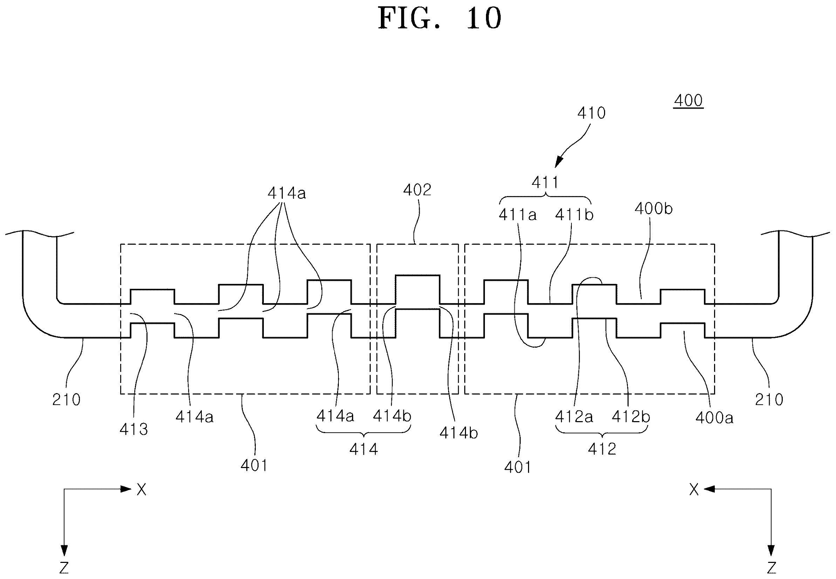

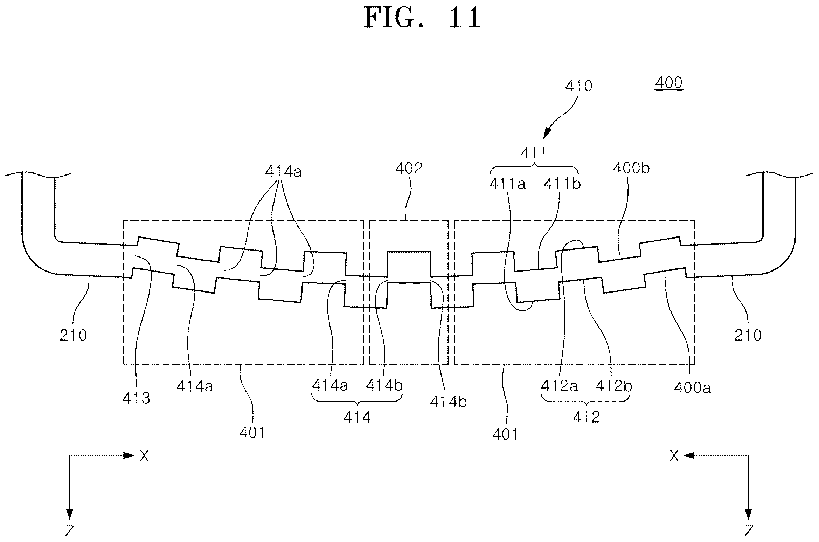

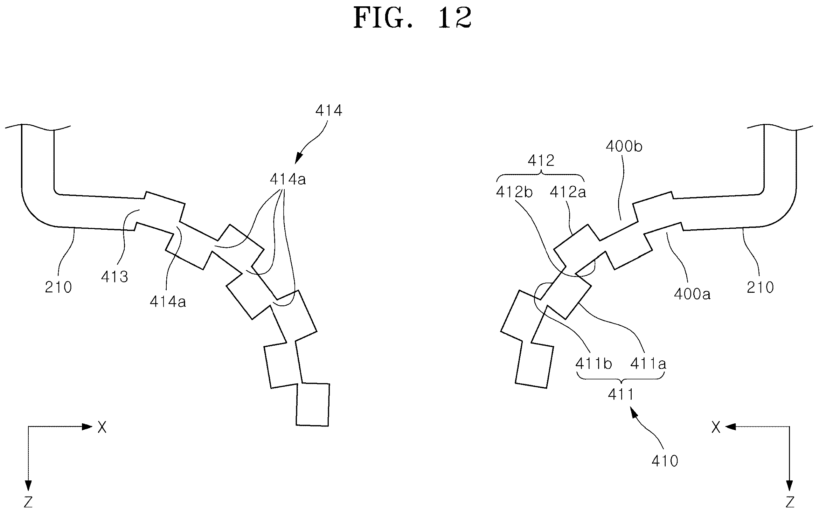

FIG. 8 is a perspective view schematically illustrating a configuration of a secondary battery according to a second embodiment of the present disclosure, and FIG. 9 is an exploded perspective view of FIG. 8. FIG. 10 is a cross-sectional view along line C-C' or D-D' in FIG. 9 (e.g., the views along lines C-C' and D-D' may be the same), FIG. 11 is a cross-sectional view schematically illustrating a state in which a vent according to the second embodiment of the present disclosure is deformed, and FIG. 12 is a cross-sectional view schematically illustrating a state in which the vent according to the second embodiment of the present disclosure is ruptured.

Referring to FIGS. 8 to 12, a secondary battery 1 according to a second embodiment of the present disclosure may include an electrode assembly 100, a case 200, and a vent 400.

In the description of the secondary battery 1 according to the second embodiment of the present disclosure, another embodiment of the vent that was not described in the secondary battery 1 according to the first embodiment of the present disclosure will be described.

The description of the secondary battery 1 according to the first embodiment of the present disclosure may be applied as is to the remaining components of the secondary battery 1 according to the second embodiment of the present disclosure without change.

The vent 400 according to the second embodiment of the present disclosure may be provided in the case 200. More specifically, the vent 400 may be integrally provided with a can 210.

The vent 400 may be integrally formed with the can 210 through a half blanking or half piercing process. The vent 400 may be disposed in a bottom portion 211 of the can 210.

The vent 400 may function as a configuration which provides a passage through which flames, gas, smoke, or the like generated in the case 200 is discharged to the outside of the case 200 through the can 210 when thermal runaway occurs in the secondary battery 1 due to overcurrent or the like.

The vent 400 may be deformed and/or ruptured in response to a change in internal pressure of the can 210. That is, the vent 400 may prevent an electrolyte or the like in the can 210 from leaking out of the can 210 through the bottom portion 211 or block moisture, foreign substances, or the like from entering the can 210 when the secondary battery 1 operates normally.

When thermal runaway occurs in the secondary battery 1, the vent 400 may rupture to induce flames, gas, smoke, or the like generated in the can 210 to be discharged out of the can 210 through the bottom portion 211.

A first direction described below may be a direction parallel to an X-axis in FIG. 10 and a direction from an edge of the vent 400 toward a central portion of the vent 400. A second direction may be a direction parallel to a Z-axis in FIG. 10 and a direction from an opening 216 of the can 210 toward the bottom portion 211.

The vent 400 according to the present embodiment is deformed by a first operating pressure and ruptured by a second operating pressure which is greater than the first operating pressure. The vent 400 may include a first portion 401 and a second portion 402.

The first operating pressure is a minimum pressure for deforming the vent 400. The first operating pressure may be a minimum pressure to which an internal pressure of the can 210 increases due to thermal runaway or a fire in the secondary battery 1 and at which emissions such as flames, gas, or smoke generated in the can 210 press the vent 400 and deform the vent 400.

The second operating pressure is a minimum pressure for rupturing the vent 400. The second operating pressure may be a minimum pressure to which an internal pressure of the can 210 increases due to thermal runaway or a fire in the secondary battery 1 and at which emissions such as flames, gas, or smoke generated in the can 210 rupture the vent 400 by further pressing the deformed vent 400.

The first portion 401 may extend from the can 210 of the case 200 in the first direction. The first portion 401 may be deformed into a rounded shape in the second direction by the first operating pressure. The first portion 401 may be deformed into a dome shape.

The first operating pressure may be greater than 5 kgf/cm² and less than 20 kgf/cm². When the first operating pressure is less than or equal to 5 kgf/cm², the first portion 401 is not deformed due to a thickness limit of the vent 400.

The second portion 402 may extend from the first portion 401 in the first direction. The second portion 402 may be deformed into a rounded shape along with the first portion 401 in the second direction by the first operating pressure. The second portion 402 may be deformed into a dome shape.

The second portion 402 may be ruptured by the second operating pressure. The second operating pressure may be 20 kgf/cm². When the second operating pressure is greater than 20 kgf/cm², a welded portion formed between the can 210 and a cap plate 220 may rupture.

The vent 400 according to the present embodiment may include an uneven portion 410. The uneven portion 410 may be formed in the first direction.

The uneven portion 410 may include a first uneven portion 411, a second uneven portion 412, a first overlapping portion 413, and a second overlapping portion 414.

The first uneven portion 411 may be provided as a plurality of first uneven portions 411, and the plurality of first uneven portions 411 may be disposed to be spaced apart from each other in the first direction. The first uneven portion 411 may include a first peak portion 411a and a first valley portion 411b.

The first peak portion 411a may protrude from a first surface 400a of the vent 400 in the second direction. The first valley portion 411b may correspond to the first peak portion 411a and may be recessed from a second surface 400b of the vent 400 in the second direction.

A height of the first peak portion 411a parallel to the second direction may be the same as a depth of the first valley portion 411b parallel to the second direction.

Lengths of the first peak portion 411a and the first valley portion 411b parallel to the first direction may each be greater than a thickness of the can 210 parallel to the second direction. When the lengths of the first peak portion 411a and the first valley portion 411b parallel to the first direction are each smaller than the thickness of the can 210 parallel to the second direction, cracks may be generated in the can 210 during a half blanking or half piercing process for the first uneven portion 411.

The second uneven portion 412 and the first uneven portion 411 may be alternately disposed in the first direction. The first uneven portion 411 and the second uneven portion 412 may be disposed in a concentric rectangular structure in which central axes are coaxial.

The second uneven portion 412 may be provided as a plurality of second uneven portions 412, and the plurality of second uneven portions 412 may be disposed to be spaced apart from each other in the first direction. The second uneven portion 412 may include a second peak portion 412a and a second valley portion 412b.

The second peak portion 412a may protrude from the second surface 400b of the vent 400 in a direction opposite to the second direction. The second valley portion 412b may correspond to the second peak portion 412a and may be recessed from the first surface 400a of the vent 400 in the direction opposite to the second direction.

A height of the second peak portion 412a parallel to the second direction may be the same as a depth of the second valley portion 412b parallel to the second direction.

Lengths of the second peak portion 412a and the second valley portion 412b parallel to the first direction may each be greater than the thickness of the can 210 parallel to the second direction. When the lengths of the second peak portion 412a and the second valley portion 412b parallel to the first direction are each smaller than the thickness of the can 210 parallel to the second direction, cracks may be generated in the can 210 during a half blanking or half piercing process for the second uneven portion 412.

The first overlapping portion 413 may overlap the can 210. The first overlapping portion 413 may be a portion at which the can 210 comes into contact with the first uneven portion 411 or the second uneven portion 412. The first overlapping portion 413 may be provided in the first portion 401.

At the second overlapping portion 414, the first uneven portion 411 and the second uneven portion 412 may overlap. The second overlapping portion 414 may be a portion at which the first uneven portion 411 and the second uneven portion 412 come into contact with each other. The second overlapping portion 414 may be provided in the first portion 401.

The first overlapping portion 413 and the second overlapping portion 414 may uniformly distribute the first operating pressure while inducing the deformation of the uneven portion 410 by the first operating pressure, and assist in rupturing the uneven portion 410 by the second operating pressure.

A thickness of the first overlapping portion 413 parallel to the second direction may be greater than a thickness of the second overlapping portion 414 parallel to the second direction.

The thickness of the second overlapping portion 414 parallel to the second direction may be greater than or equal to 1/10 or less than or equal to 1/2 of the thickness of the can 210 parallel to the second direction. When the thickness of the second overlapping portion 414 parallel to the second direction is smaller than 1/10 of the thickness of the can 210 parallel to the second direction, it is difficult to implement a half blanking or half piercing process for forming the uneven portion 410, and when the thickness of the second overlapping portion 414 parallel to the second direction is greater than 1/2 of the thickness of the can 210 parallel to the second direction, the uneven portion 410 may not be deformed.

The thickness of the second overlapping portion 414 parallel to the second direction may decrease in the first direction. Accordingly, the uneven portion 410 may be deformed into a rounded dome shape.

The second overlapping portion 414 may include a deformable overlapping portion 414a and a rupturable overlapping portion 414b.

The deformable overlapping portion 414a may be deformed by the first operating pressure. The deformation of the uneven portion 410 may be induced by the first operating pressure. The deformable overlapping portion 414a may be provided in the first portion 401.

The rupturable overlapping portion 414b may be deformed along with the deformable overlapping portion 414a by the first operating pressure and ruptured by the second operating pressure. The rupturable overlapping portion 414b may be closer to a central portion of the uneven portion 410 than the deformable overlapping portion 414a. In other words, the rupturable overlapping portion 414b may be provided in the second portion 402.

A thickness of the rupturable overlapping portion 414b parallel to the second direction may be smaller than a thickness of the deformable overlapping portion 414a parallel to the second direction and may be greater than or equal to 1/10 and less than or equal to 1/3 of the thickness of the can 210 parallel to the second direction.

When the thickness of the rupturable overlapping portion 414b parallel to the second direction is smaller than 1/10 of the thickness of the can 210 parallel to the second direction, it may be difficult to implement the half blanking or half piercing process for forming the uneven portion 410, and when the thickness of the rupturable overlapping portion 414b parallel to the second direction is greater than the thickness of the deformable overlapping portion 414a or greater than 1/3 of the thickness of the can 210, the rupturable overlapping portion 414b may not be ruptured by the second operating pressure.

According to one embodiment of the present disclosure, since a can or cap plate is integrally formed with a vent through a pressing or cutting process, a manufacturing process can be simplified to reduce manufacturing costs, deformation and the distribution of a rupture pressure due to a conventional welding process for a vent can be addressed, and a pressure can be uniformly distributed when an internal pressure of the can increases.

However, the effects obtainable through the present disclosure are not limited to the above effects, and other technical effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments within the scope defined by the appended set of claims. Therefore, the technical scope of the present disclosure should be defined by the claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (1), comprising:
an electrode assembly (100);
a case (200) accommodating the electrode assembly (100); and
a vent (300, 400) in the case (200), the vent (300, 400) being deformable by a first operating pressure and rupturable by a second operating pressure greater than the first operating pressure.

2. The secondary battery (1) as claimed in claim 1, wherein the case (200) includes:
a can (210) in which the electrode assembly (100) is accommodated; and
a cap plate (220) coupled to the can (210), the cap plate (220) covering an opening (216) in the can, wherein the vent (300, 400) is in the cap plate (220) or the can (210).

3. The secondary battery (1) as claimed in claim 1 or 2, wherein the vent (300, 400) includes:
a first portion (301, 401) extending from the case (200) in a first direction, the first portion (301, 401) being deformable by the first operating pressure; and
a second portion (302, 402) extending from the first portion (301, 401) in the first direction, the second portion (302, 402) being deformable with the first portion (301, 401) by the first operating pressure and rupturable by the second operating pressure.

4. The secondary battery (1) as claimed in any one of the preceding claims, wherein:
the first operating pressure is greater than 5 kgf/cm² and less than 20 kgf/cm²; and
the second operating pressure is 20 kgf/cm².

5. The secondary battery (1) as claimed in any one of the preceding claims, wherein the vent (300, 400) includes an uneven portion (310, 410) in a first direction.

6. The secondary battery (1) as claimed in claim 5, wherein the uneven portion (310, 410) includes:
a first uneven portion (311, 411); and
a second uneven portion (312, 412) alternating with the first uneven portion (311, 411) in the first direction.

7. The secondary battery (1) as claimed in claim 6, wherein the uneven portion (310, 410) further includes:
a first overlapping portion (313, 413) overlapping the case (200); and
a second overlapping portion (314, 414) at which the first uneven portion (311, 411) and the second uneven portion (312, 412) overlap.

8. The secondary battery (1) as claimed in claim 7, wherein a thickness of the first overlapping portion (313, 413) parallel to a second direction intersecting the first direction is greater than a thickness of the second overlapping portion (314, 414) parallel to the second direction.

9. The secondary battery (1) as claimed in claim 8,
wherein the thickness of the second overlapping portion (314, 414) parallel to the second direction decreases in the first direction, or
wherein the thickness of the second overlapping portion (314, 414) parallel to the second direction is greater than or equal to 1/10 and less than or equal to 1/2 of a thickness of the case (200) parallel to the second direction.

10. The secondary battery (1) as claimed in any one of claims 7 to 9, wherein the second overlapping portion (314, 414) includes:
a deformable overlapping portion (314a, 414a) deformable by the first operating pressure; and
a rupturable overlapping portion (314b, 414b) deformable along with the deformable overlapping portion (314a, 414a) by the first operating pressure and rupturable by the second operating pressure.

11. The secondary battery (1) as claimed in claim 10,
wherein a thickness of the rupturable overlapping portion (314b, 414b) parallel to the second direction is smaller than a thickness of the deformable overlapping portion (314a, 414a) parallel to the second direction, or
wherein a thickness of the rupturable overlapping portion parallel (314b, 414b) to the second direction is greater than or equal to 1/10 and less than or equal to 1/3 of a thickness of the case (200) parallel to the second direction.

12. The secondary battery (1) as claimed in claim 6, wherein the first uneven portion (311, 411) includes:
a first peak portion (311a, 411a) protruding from a first surface of the vent (300, 400) in a second direction intersecting the first direction; and
a first valley portion (311b, 411b) recessed in the second direction from a second surface of the vent (300, 400) in a direction opposite to the first surface.

13. The secondary battery (1) as claimed in claim 12,
wherein a height of the first peak portion (311a, 411a) parallel to the second direction is equal to a depth of the first valley portion (311b, 411b) parallel to the second direction, or
wherein lengths of the first peak portion (311a, 411a) and the first valley portion (311b, 411b) parallel to the first direction are each greater than a thickness of the case (200) parallel to the second direction.

14. The secondary battery (1) as claimed in claim 12, wherein the second uneven portion (312, 412) includes:
a second peak portion (312a, 412a) protruding from the second surface in a direction opposite to the second direction; and
a second valley portion (312b, 412b) recessed from the first surface in the direction opposite to the second direction.

15. A battery module, comprising:
a housing (10); and
at least one secondary battery (1) according to any one of the preceding claims, wherein the at least one secondary battery (1) is disposed in the housing (10).
